# EUROPÄISCHE PATENTSCHRIFT

(11) **EP 3 394 454 B1**
(45) Veröffentlichungstag und Bekanntmachung des Hinweises auf die Patenterteilung: **04.08.2021**
(21) Anmeldenummer: 16825325.0
(22) Anmeldetag: 21.12.2016
(51) Int. Cl.: F15B 13/04, F15B 13/044, F16K 11/00, G05D 16/20

(54) **VENTIL, INSBESONDERE 4/2-WEGESCHIEBERVENTIL**
VALVE, IN PARTICULAR A 4/2-WAY SLIDE VALVE
SOUPAPE, EN PARTICULIER DISTRIBUTEUR À TIROIR À 4/2 VOIES

(30) Priorität: 23.12.2015 DE 102015016846
(43) Veröffentlichungstag der Anmeldung: 31.10.2018
(73) Patentinhaber: Hydac Fluidtechnik GmbH, 66280 Sulzbach/Saar (DE)
(72) Erfinder: HILZENDEGEN, Philipp, 66687 Wadern (DE); BRUCK, Peter, 66484 Althornbach (DE); GRILL, Martin, 66606 St. Wendel (DE)
(74) Vertreter: Bartels, Martin Erich Arthur
(86) Internationale Anmeldenummer: PCT/EP2016/002149
(87) Internationale Veröffentlichungsnummer: WO 2017/108183

(56) Entgegenhaltungen:
- EP-A1- 1 741 936
- EP-A1- 2 960 561
- WO-A1-2015/028108
- DE-A1-102013 002 794

## Beschreibung

Die Erfindung betrifft ein Ventil, insbesondere ein 4/2-Wegeschieberventil, mit den Merkmalen im Oberbegriff von Anspruch 1.

Ventile dieser Art sind Stand der Technik und kommen in den verschiedensten Systemen für die Steuerung strömungsfähiger Medien zum Einsatz. Das Dokument DE 42 27 767 A1 zeigt beispielhaft ein 4/2-Wegeschieverventil der eingangs genannten Gattung zur Steuerung des Regeneriersystems einer Filteranlage für Trinkwasser. Insbesondere kommen 4/2-Wegeschieber-ventile auch in Hydrauliksystemen zum Einsatz, beispielsweise zur Versorgung von Aktoren, wie Arbeitszylindern. Wenn über Wegeventile gesteuerte Arbeitszylinder bei Arbeitsgerätschaften, wie Baumaschinen, Baggern, Radlagern oder dergleichen, als Aktoren für Hub- oder Greiffunktionen benutzt werden, sind an die Funktionssicherheit besonders hohe Anforderungen zu stellen. Eine typische Anwendung von Arbeitszylindern bei Baumaschinen besteht beispielsweise darin, dass für einen vorzunehmenden Werkzeugwechsel, beispielsweise durch Aufnehmen einer Baggerschaufel, ein Verriegelungsvorgang zum Kuppeln eines Arbeitsarmes mit der Baggerschaufel durchzuführen ist, wobei zur Verriegelung mit dem betreffenden Werkzeug eine Verbolzungseinheit von einem Hydraulikzylinder angetrieben wird. Um Beschädigungen für den Fall zu vermeiden, dass ausfahrende Verriegelungsbolzen bei Fehlpositionierung nicht in die Bolzenaufnahmen einfahren, sondern mit dem aufzunehmenden Werkzeug kollidieren, muss sichergestellt sein, dass das Ausfahren der Verriegelungsbolzen nicht unter dem vollen Druck des Hydrauliksystems der betreffenden Arbeitsmaschine erfolgt, sondern mit einem Arbeitsdruck, der im Kollisionsfall das Werkzeug nicht beschädigt, während das Einfahren der betreffenden Bolzen wiederum mit dem normalen Systemdruck erfolgt. Um dies sicherzustellen, ist man daher gezwungen, dem 4/2-Wegeschieberventil ein Druckminderventil und ein einen Bypass zu diesem bildendes Rückschlagventil nachzuschalten, wodurch für die sichere Steuerung des Arbeitszylinders ein erhöhter Platzbedarf und Kostenaufwand erforderlich sind.

Die nicht vorveröffentlichte EP 2 960 561 A1 offenbart ein Ventil, insbesondere ein 4/2-Wegeschieberventil, mit einem in einem Ventilgehäuse längsverfahrbar geführten Ventilkolben zum wahlweisen Verbinden und Trennen von Fluid-Anschlüssen im Ventilgehäuse, wie einem Druckversorgungs-, einem Tank- und zwei Nutzanschlüssen, und mit einem bestrombaren Magnetsystem zum Ansteuern des Ventilkolbens, wobei im unbestromten Zustand des Magnetsystems mittels einer im Ventilgehäuse angeordneten Regeleinrichtung sich der Regeldruck an einem der Nutzanschlüsse einstellen, insbesondere begrenzen, lässt, wobei die Regeleinrichtung den an dem einen Nutzanschluss anstehenden Fluiddruck in eine Regeldruckkammer weiterleitet zwecks Ansteuern eines mit dem Ventilkolben in Wirkverbindung stehenden Druckmeldekolbens, der entgegen der Wirkung eines Energiespeichers, wie einer Druckfeder, Verfahrbewegungen des Ventilkolbens zum Einregeln des Fluidvolumenstroms zwischen dem Druckversorgungsanschluss und diesem einen Nutzanschluss ermöglicht.

Weitere Ventile gehen aus der EP 1 741 936 A1, der WO 2015/028108 A1 und der DE 10 2013 002 794 A1 hervor.

Ausgehend von diesem Stand der Technik stellt sich die Erfindung die Aufgabe, ein Ventil zur Verfügung zu stellen, das die sichere Steuerung eines für Kuppelvorgänge vorgesehenen Arbeitszylinders mit vergleichsweise verringertem Aufwand ermöglicht.

Erfindungsgemäß ist diese Aufgabe durch ein Ventil gelöst, das die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass der Druckmeldekolben in verfahrbarer Weise eine im Ventilgehäuse stationär angeordnete Führung durchgreift und mit seinem einen freien Ende in jedem Verfahrzustand des Ventilkolbens mit diesem in permanenter Anlage ist und mit seinem anderen Ende in Anlage mit einer Betätigungsstange des Magnetankers des Magnetsystems ist.

Das Ventil bildet somit eine vom Magnetsystem bis zum Ende des Ventilgehäuses koaxial durchgehende Einheit. Dabei kann die Regeldruckkammer veränderlichen Volumens von dem Ventilgehäuse umfasst sowie von der Führung und dem Ventilkolben begrenzt sein.

Es ist ferner vorgesehen, dass in unbestromtem Zustand des Magnetsystems mittels einer im Ventilgehäuse angeordneten Regeleinrichtung sich der Regeldruck an einem der Nutzanschlüsse einstellen, insbesondere begrenzen lässt. Dadurch, dass dergestalt eine Ventileinheit sowohl die Wegesteuerung als auch die für die Betriebssicherheit erforderliche Druckminderfunktion erfüllt, verringert sich der Steuerungsaufwand sowohl hinsichtlich des Platzbedarfs als auch hinsichtlich des Kostenaufwands.

Um den Druckmeldekolben mit dem an dem einen Nutzanschluss anstehenden Fluiddruck zu beaufschlagen, kann die Regeldruckkammer über eine Blende oder Drossel sowie eine Ausnehmung im Ventilkolben permanent fluidführend mit demjenigen Nutzanschluss verbunden sein, dessen jeweils herrschender Fluiddruck an die Regeldruckkammer weitergemeldet ist.

Für die Ansteuerung des betreffenden, zu versorgenden Arbeitszylinders kann die Anordnung mit Vorteil so getroffen sein, dass in bestromtem Zustand des Magnetsystems der Ventilkolben eine Position innerhalb des Ventilgehäuses einnimmt, bei dem der Druck im Druckversorgungsanschluss dem Druck am weiteren Nutzanschluss entspricht, so dass im bestromten Zustand der Arbeitszylinder mit dem vollen Systemdruck beaufschlagt ist.

Für eine vorteilhafte Ausbildung des Ventils in Form einer sich an das Magnetsystem anschließenden Ventilpatrone kann der Ventilkolben außenumfangsseitig mit konzentrisch zu seiner Verfahrachse angeordneten Fluidführungen versehen sein, die je nach Stellung des Ventilkolbens zumindest eine Verbindung vom Druckversorgungsanschluss mit dem jeweiligen Nutzanschluss sowie des jeweiligen Nutzanschlusses mit dem Tankanschluss ermöglichen.

Der in Form der Druckfeder ausgebildete Energiespeicher wirkt vorzugsweise auf diejenige Seite des Magnetankers ein, welche dem Ventilkolben abgewandt ist.

Bei der Ausbildung des Ventilgehäuses in der Art einer Ventilpatrone ist die Anordnung vorzugsweise derart getroffen, dass der eine bei unbestromtem Magnetsystem vom Fluidvolumenstrom einzuregelnde Nutzanschluss stirnseitig in das Ventilgehäuse eintritt und die weiteren Anschlüsse radial im Ventilgehäuse geführt sind.

Gemäß dem Patentanspruch 18 ist Gegenstand der Erfindung auch eine Befestigungsvorrichtung mit einem Ventil nach einem der Ansprüche 1 bis 17 und mindestens einem ansteuerbaren Hydraulikzylinder, dessen Kolben-Stangeneinheit zwei Arbeitsräume voneinander separiert, die an jeweils einen Nutzanschluss des Ventils nach einem der Ansprüche 1 bis 17 angeschlossen sind, wobei sich die Befestigungsvorrichtung dadurch auszeichnet, dass beim Ausfahren der Kolben-Stangeneinheit und deren Kollision mit einem Drittbauteil, wie einer Baggerschaufel, die Regeleinrichtung des Ventils anspricht und einen mechanisch einstellbaren, begrenzten Regeldruck für das Ansteuern der Kolben-Stangeneinheit ausgibt.

Nachstehend ist die Erfindung anhand eines in der Zeichnung dargestellten Ausführungsbeispiels im Einzelnen erläutert. Es zeigen:
- Fig. 1: in Symboldarstellung die Schaltung einer Ventileinrichtung mit einem 4/2-Wegeschieberventil gemäß dem Stand der Technik zur Ansteuerung des Arbeitszylinders einer lediglich stark schematisiert angedeuteten Befestigungsvorrichtung;
- Fig. 2: eine Symboldarstellung des erfindungsgemäßen Ventils;
- Fig. 3: einen Längsschnitt eines Ausführungsbeispiels des erfindungsgemäßen Ventils, eingesetzt in einen Ventilblock, wobei ein dem bestromten Magnetsystem entsprechender Betriebszustand gezeigt ist;
- Fig. 4 bis 6: Darstellungen des Ausführungsbeispiels, in denen das Magnetsystem in Ansicht und das Ventilgehäuse, ohne zugehörigen Ventilblock, im Längsschnitt gezeigt sind und wobei unterschiedliche Betriebszustände des Ventils dargestellt sind; und
- Fig. 7: einen vergrößert und abgebrochen gezeichneten Teillängsschnitt des Ventilgehäuses, wobei der auch in Fig. 5 gezeigte Betriebszustand dargestellt ist.

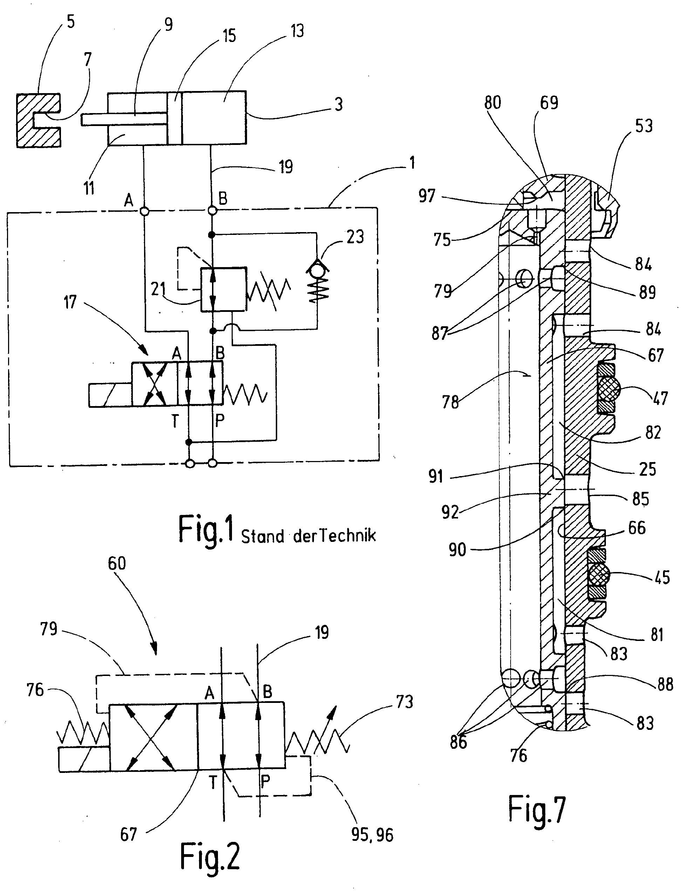

In Fig. 1 ist eine Ventilanordnung mit 1 bezeichnet, die zur Ansteuerung eines Arbeitszylinders 3 vorgesehen ist, der den Aktor für eine Befestigungsvorrichtung bildet, von der lediglich eine Bolzenaufnahme 5 in schematisch stark vereinfachter Darstellung angedeutet ist. Bei der Befestigungsvorrichtung handelt es sich beim vorliegenden Beispiel um eine sog. Quick-Coupler-Einrichtung, wie sie bei Baumaschinen, wie Baggern, Radlagern und dergleichen, benutzt wird, um ein Arbeitswerkzeug, wie eine Schaufel, für einen Werkzeugwechsel aufzunehmen oder abzusetzen. Bei diesen Einrichtungen kommen zur Herstellung einer Kupplungsverbindung hydraulisch ausfahrbare Verriegelungsbolzen mit Büchsen 7 in der Bolzenaufnahme 5 in Kupplungseingriff, wobei die Verriegelungsbolzen unmittelbar durch die Kolbenstange 9 des betreffenden Arbeitszylinders 3 selbst oder durch ein mit der Kolbenstange 9 mechanisch verbundenes Glied gebildet sind. Der jeweilige Arbeitszylinder 3 ist als doppelt wirkender Zylinder mit stangenseitigem Arbeitsraum 11 und kolbenseitigem Arbeitsraum 13 ausgebildet, von denen der letztgenannte mit einem Nutzanschluss B und der stangenseitige Arbeitsraum 11 mit einem Nutzanschluss A der Ventilanordnung 1 verbunden ist. Für den Entriegelungsvorgang ist der stangenseitige Arbeitsraum 11 über den Nutzanschluss A mit Druckfluid versorgbar, und der kolbenseitige Arbeitsraum 13 ist für den Kupplungsvorgang über den Nutzanschluss B mit Druckfluid versorgbar, um den Arbeitskolben 15 und damit die Kolbenstange 9 für den Kupplungseingriff auszufahren. Die Ventilanordnung 1 ist für diese Druckversorgung mit ihren Anschlüssen P und T mit dem Hydrauliksystem der zugehörigen Baumaschine in Verbindung, wobei am Anschluss P der Systemdruck des Hydrauliksystems anliegt und der Anschluss T mit Tank verbunden ist.

Die Ventilanordnung 1 weist für die wahlweise Verbindung des Druckversorgungsanschlusses P und des Tankanschlusses T mit den Arbeitsräumen 11 und 13 des Arbeitszylinders 3 ein 4/2-Wegeschieberventil 17 auf, das elektromagnetisch betätigbar ist. Während für die Einfahrbewegung des Kolbens 15 und damit die Entriegelungsbewegung von Kolbenstange 9 und Verriegelungsbolzen die Versorgung des Arbeitsraumes 11 mit vollem Systemdruck, durch Umschalten des 4/2-Wegeschieberventils 17 aus der in Fig. 1 gezeigten Ventilstellung erfolgt, muss der kolbenseitige Arbeitsraum 13 für das Ausfahren des Kolbens 15 und damit der betreffenden Verriegelungsbolzen mit verringertem Betätigungsdruck erfolgen, um im Kollisionsfall mechanische Beschädigungen der betreffenden Verriegelungsbolzen und/oder der Bolzenaufnahme 5 zu vermeiden. Die Ventilanordnung 1 weist daher zwischen dem 4/2-Wegeschieberventil 17 und dem kolbenseitigen Arbeitsraum 13 ein Druckminderventil 21 auf, das auf einen Druck eingestellt ist, der eine verringerte Kolbenkraft erzeugt, die im Kollisionsfall unschädlich ist. Um beim Einfahren des Kolbens 15 das aus dem kolbenseitigen Arbeitsraum 13 verdrängte Volumen im Wesentlichen druckfrei zum Tank abströmen zu lassen, ist ein Bypass zum Druckminderventil 21 erforderlich, der durch ein zusätzliches Rückschlagventil 23 gebildet ist.

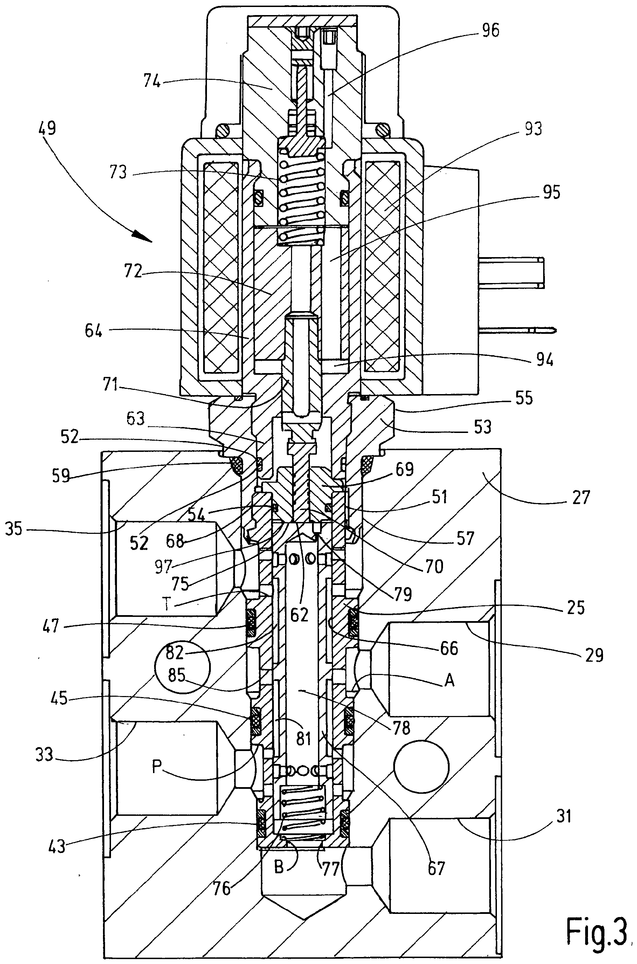

Das erfindungsgemäße Ventil 60, von dem die Fig. 2 die Symboldarstellung zeigt, fasst die Gesamtfunktionen der Ventilanordnung 1 zusammen, also sowohl die Schaltfunktion des 4/2-Wegeschieberventils 17 als auch die Druckminderfunktion des Druckminderventils 21, wobei auch das zusätzliche Rückschlagventil 23 der Ventilanordnung 1 in Wegfall kommt. Die näheren konstruktiven Einzelheiten des erfindungsgemäßen Ventils 60 sind in den folgenden Figuren 3 bis 7 dargestellt.

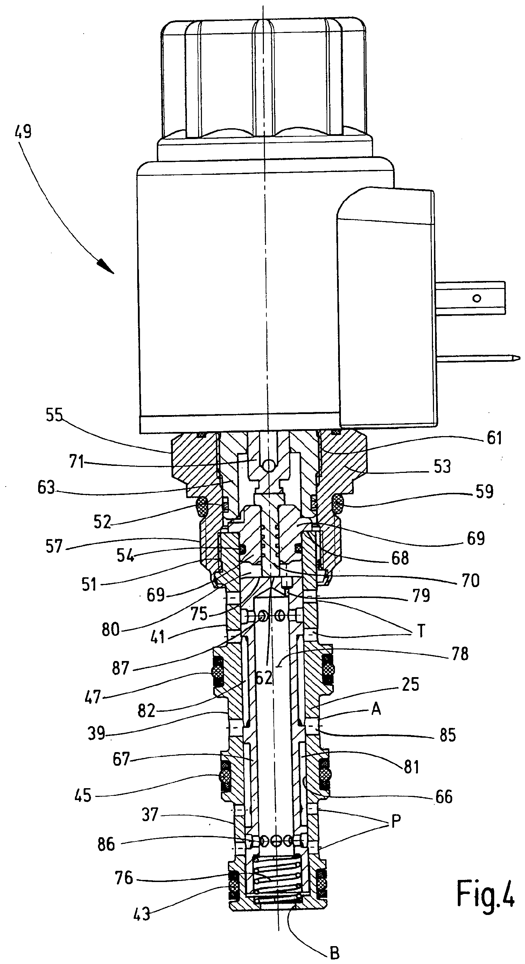

Wie gezeigt weist das Ausführungsbeispiel ein Ventilgehäuse 25 auf, das in der Art einer Ventilpatrone in einen Ventilblock 27 einbaubar ist, der lediglich in Fig. 3 gezeigt ist und Anschlussstellen 29 und 31 für Nutzanschlüsse A bzw. B sowie Anschlussstellen 33 und 35 für Druckversorgungsanschluss P bzw. Tankanschluss T aufweist. Wie am deutlichsten die Fig. 4 bis 7 zeigen, ist der Außenumfang des Ventilgehäuses 25 gestuft, so dass, von dem in den Figuren untenliegenden Ende ausgehend, im Durchmesser verringerte Abschnitte 37, 39 und 41 gebildet sind, die gegenüber dem Ventilblock 27 durch an den nicht vertieften Umfangsabschnitten befindliche Dichteinrichtungen 43, 45 und 47 abgedichtet sind. Für den Einbau in den Ventilblock 27 weist das Ventilgehäuse 25 an demjenigen Ende, das einem zur Ansteuerung vorgesehenen Magnetsystem 49 zugewandt ist, ein Außengewinde 51 auf, mit dem ein Einschraubkörper 53 verschraubbar ist, der in Form einer Hohlschraube mit einem Außensechskant 55 ausgebildet ist und auf der vom Magnetsystem 49 abgewandten Seite ein Außengewinde 57 aufweist, mit dem er in den Ventilblock 27 eingeschraubt ist, wobei ein Dichtring 59 an einer Stufe des Einschraubkörpers 53 die Abdichtung bildet. Auf der dem Magnetsystem 49 zugewandten Seite weist der Einschraubkörper 53 ein Innengewinde 61 auf, in das der Endabschnitt 63 des Polrohres 64 (Fig. 3) des Magnetsystems 49 eingeschraubt ist, wobei ein Dichtring 52 die Abdichtung bildet.

Das Ventilgehäuse 25 weist innenseitig eine kreiszylindrische Kolbenführung 66 für einen Ventilkolben 67 auf. Bei dem in den Figuren dargestellten Zustand, bei dem das Ventilgehäuse 25 über den Einschraubkörper 53 mit dem Polrohr 64 des Magnetsystems verschraubt ist, ist zwischen Ende 68 des Ventilgehäuses 25 und dem Endabschnitt 63 des Polrohres 64 ein Führungskörper 69 festgelegt, der einen koaxialen Durchgang als Verschiebeführung für einen Druckmeldekolben 70 bildet, der mit seinem dem Magnetsystem 49 zugewandten Ende an einer Betätigungsstange 71 des Mag-netankers 72 (Fig. 3) anliegt. Mittels einer Druckfeder 73, die sich einerseits an dem von der Betätigungsstange 71 abgewandten Ende des Ankers 72 und andererseits am Polkern 74 (Fig. 3) des Magnetsystems 49 abstützt, sind Anker 72, Betätigungsstange 71 und Druckmeldekolben 70 für eine Bewegung in Richtung auf den Ventilkolben 67 vorgespannt. Dieser ist mit seinem dem Druckmeldekolben 70 zugewandten Kolbenende 75 mittels einer Anlegefeder 76 in permanenter Anlage mit dem Druckmeldekolben 70. Diese stützt sich an einem am freien Ende des Ventilgehäuses gebildeten Bund 77 ab, der eine zentrale, endseitige Öffnung des Ventilgehäuses 25 begrenzt und an diesem den Nutzanschluss B bildet, der, wie Fig. 3 zeigt, mit der Anschlussstelle 31 verbunden ist.

Der Ventilkolben 67 weist einen koaxialen inneren Hohlraum 78 auf, der sich vom offenen Ende am Nutzanschluss B bis kurz vor das am Druckmeldekolben 70 anliegende Kolbenende 75 erstreckt, wo der Ventilkolben 67 bis auf einen eine Drosselstelle 79 aufweisenden Durchgang geschlossen ist. Diese Drosselstelle 79 verbindet den Nutzanschluss B mit einer Regeldruckkammer 80, die zwischen dem Kolbenende 75 und dem Führungskörper 69 gebildet ist. Dadurch ist der Fluiddruck der Regeldruckkammer 80 an der der Regeldruckkammer 80 zugewandten Kolbenfläche 62 des Druckmeldekolbens 70 wirksam.

Der Ventilkolben 67 ist in der bei Schieberventilen üblichen Weise außenumfangsseitig mit konzentrisch zur Verfahrachse in Axialrichtung verlaufenden Fluidführungen 81 und 82 versehen, über die, je nach Regelstellung des Ventilkolbens 67, Verbindungen zwischen Druckversorgungsanschluss P und Nutzanschluss A oder B sowie zwischen Tankanschluss T und Nutzanschluss A oder B herstellbar sind. Für diese Verbindungen sind in der Wand des Ventilgehäuses 25 für den Druckversorgungsanschluss P Öffnungen 83, für den Tankanschluss T Öffnungen 84 und für den Nutzanschluss A Öffnungen 85 gebildet, die lediglich in Fig. 7 beziffert sind. Wie ebenfalls aus dieser Fig. 7 am deutlichsten zu ersehen ist, bilden die nicht vertieften Umfangsbereiche des Ventilkolbens 67, die die Fluidführungen 81 und 82 begrenzen, Steuerkanten, die den Fluiddurchgang an den Öffnungen 83, 84 und 85 steuern. Die Regelkante 88 ist an der Bohrung 83 vorhanden, die zum Druckversorgungsanschluss P führt. Die Regelkante 89 ist am Rand der Bohrung 84 angeordnet, die zum Tankanschluss T führt. Die Kanten 90 und 91 am Rand des unvertieften Bereichs 92 steuern den Durchgang an den Öffnungen 85 des Nutzanschlusses A.

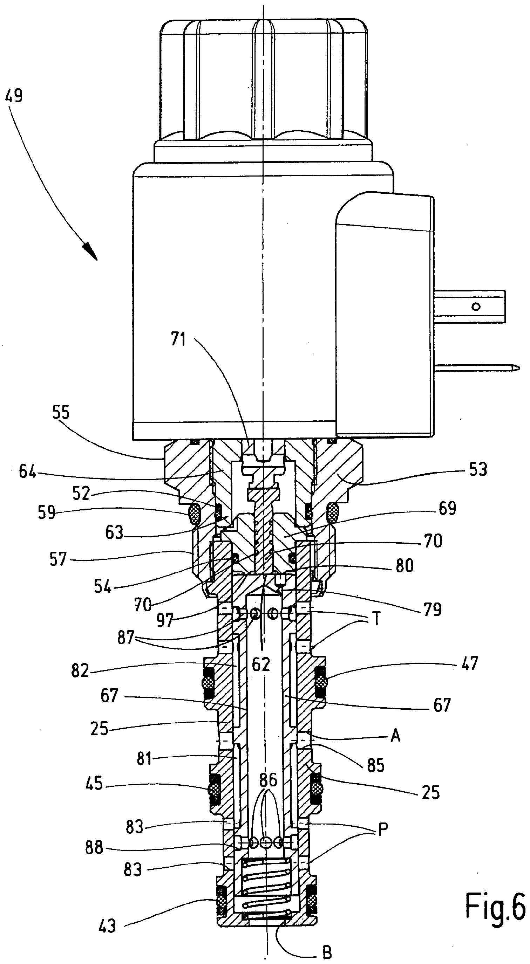

Die Fig. 3 und 6 zeigen einen Betriebszustand, bei dem das als sog. "ziehender Magnet" ausgebildete Magnetsystem 49 durch Versorgung seiner Wicklung 93 bestromt ist. Im Ankerraum 94, der in üblicher Weise über Durchgänge 95 und 96 im Anker 72 bzw. im Polkern 74 zur Umgebung hin entlüftet ist, hat sich der Anker 72 gegen die Wirkung der Druckfeder 73 bewegt. Da der Ventilkolben 67 unter der Einwirkung der Anlegefeder 76 mit seinem Kolbenende 75 an der Kolbenfläche 62 des Druckmeldekolbens 70 anliegt, hat er sich zusammen mit der Betätigungsstange 71 des Ankers 72 in den Figuren nach oben in die in Fig. 3 und 6 gezeigte Position bewegt. In dieser Position hat die Regeldruckkammer 80 das kleinste Volumen, das der Größe eines Spaltes entspricht, der zwischen dem Ende 75 des Ventilkolbens 67 und dem Führungskörper 69 durch eine Ringrippe 97 gebildet ist, die, zum Druckmeldekolben 70 koaxial, vom Führungskörper 69 vorsteht. Diese bei Bestromen des Magnetsystems 49 eingenommene Stellung des Ventilkolbens 67 bewirkt die Entriegelung, da die Öffnungen 83 des Druckversorgungsanschlusses P am Ventilgehäuse 25 über die Fluidführung 81 mit der Öffnung 85 des Druckversorgungsanschlusses A in Verbindung sind, während gleichzeitig der Nutzanschluss B über die Bohrungen 87 mit den Öffnungen 84 des Tankanschlusses T in Verbindung sind, so dass das beim Entriegelungsvorgang aus dem Arbeitsraum 13 des Arbeitszylinders 3 verdrängte Volumen nach dem Tank abströmt.

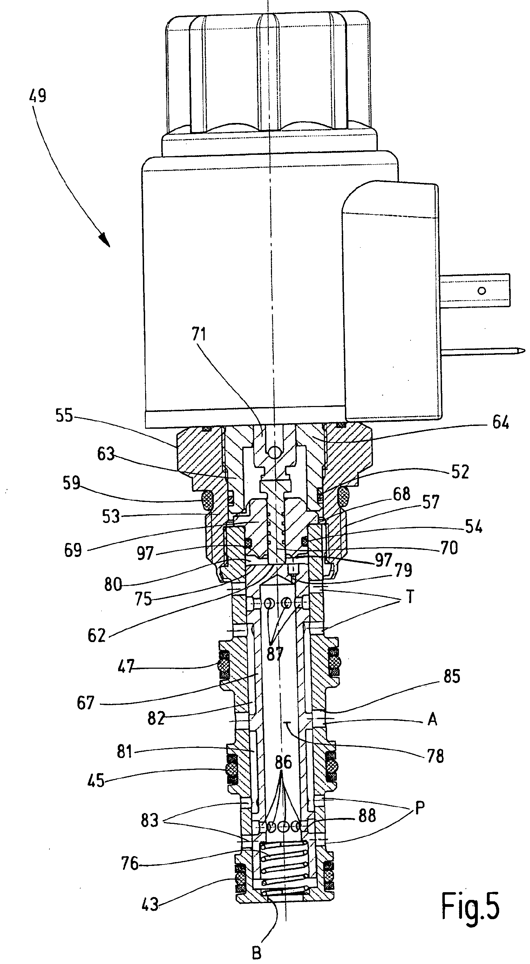

Für einen Verriegelungsvorgang wird die Bestromung der Wicklung 93 unterbrochen. Die Druckfeder 73 verschiebt dadurch den Anker 72 und über dessen Betätigungsstange 71 den Druckmeldekolben 70 in die in Fig. 4 gezeigte Position, wobei der dadurch verschobene Ventilkolben 67 nunmehr die Öffnungen 83 des Druckversorgungsanschlusses P am Ventilgehäuse 25 über die Bohrungen 86 im Ventilkolben 67 mit dem Nutzanschluss B verbindet, während die Öffnungen 85 des Nutzanschlusses A über die Fluidführung 82 mit den Öffnungen 84 des Tankanschlusses T verbunden sind, so dass sich der Arbeitskolben 15 zum Ausfahren der Kolbenstange 9 bewegt und das Volumen aus dem Arbeitsraum 11 des Arbeitszylinders gegen Tank T verdrängt wird. Über den die Drosselstelle 79 aufweisenden Durchgang ist gleichzeitig der im Hohlraum 78 des Ventilkolbens 76 herrschende Druck des Nutzanschlusses B in der Regeldruckkammer 80 wirksam und beaufschlagt die wirksame Kolbenfläche 62 des Druckmeldekolbens 70. Bei einem Druckniveau, das mechanisch durch Auslegung der Druckfeder 73 und der Anlegefeder 76 sowie durch die Größe der wirksamen Kolbenfläche 62 des Druckmeldekolbens 70 eingestellt ist, verschiebt sich der Druckmeldekolben 70 gegen die Kraft der Druckfeder 73. Der Ventilkolben 67, der unter der Wirkung der Anlegefeder 76 dieser Bewegung folgt, kommt aus der in Fig. 4 gezeigten Position in eine dem Gleichgewicht der Federkräfte und der Kolbenkraft des Druckmeldekolbens 70 entsprechende Regelposition, s. Fig. 5 und 7, bei der die Position der Regelkante 88 des Ventilkolbens 67 an den Öffnungen 86 des Druckversorgungsanschlusses P den die Ausfahrbewegung des Kolbens 15 bewirkenden Druck am Nutzanschluss B auf einen gewünschten sicheren Wert regelt. Das erfindungsgemäße Ventil 60 erfüllt dadurch nicht nur die Schaltfunktionen für die Entriegelungs- und Verriegelungsvorgänge durch Bestromen oder stromlos machen der Wicklung 93 des Magnetsystems 49, sondern darüber hinaus eine Druckregelfunktion, so dass das beim Stand der Technik vorgesehene Druckminderventil 21 mit Rückschlagventil 23 in Wegfall kommt.

## Patentansprüche

1. Ventil, insbesondere ein 4/2-Wegeschieberventil (60), mit einem Ventilgehäuse (25), das einen Druckversorgungs- (P), einen Tank- (T) und zwei Nutzanschlüssen (A, B) als Fluid-Anschlüssen aufweist, mit einem in dem Ventilgehäuse (25) längsverfahrbar geführten Ventilkolben (67) zum wahlweisen Verbinden und Trennen von den Fluid-Anschlüssen im Ventilgehäuse (25), und mit einem bestrombaren Magnetsystem (49) zum Ansteuern des Ventilkolbens (67), wobei im unbestromten Zustand des Magnetsystems (49) mittels einer im Ventilgehäuse angeordneten Regeleinrichtung (62, 70, 79, 80, 88) sich der Regeldruck an einem der Nutzanschlüsse (A, B) einstellen, insbesondere begrenzen, lässt, wobei die Regeleinrichtung den an dem einen Nutzanschluss (B) anstehenden Fluiddruck in eine Regeldruckkammer (80) weiterleitet zwecks Ansteuern eines mit dem Ventilkolben (67) in Wirkverbindung stehenden Druckmeldekolbens (62, 70), der entgegen der Wirkung eines Energiespeichers, wie einer Druckfeder (73), Verfahrbewegungen des Ventilkolbens (67) zum Einregeln des Fluidvolumenstroms zwischen dem Druckversorgungsanschluss (P) und diesem einen Nutzanschluss (B) ermöglicht, wobei der Druckmeldekolben (62, 70) in verfahrbarer Weise eine im Ventilgehäuse (25) stationär angeordnete Führung (69) durchgreift und mit seinem einen freien Ende (62) in jedem Verfahrzustand des Ventilkolbens (67) mit diesem in permanenter Anlage ist und mit seinem anderen Ende in Anlage mit einer Betätigungsstange (71) des Magnetankers (72) des Magnetsystems (49) ist.

2. Ventil nach Anspruch 1, **dadurch gekennzeichnet, dass** die Regeldruckkammer (80) veränderlichen Volumens von dem Ventilgehäuse (25) umfasst sowie von der Führung (69) und dem Ventilkolben (67) begrenzt ist.

3. Ventil nach Anspruch 1 oder 2, **dadurch gekennzeichnet, dass** die Regeldruckkammer (80) über eine Blende oder Drossel (79) sowie eine Ausnehmung (78) im Ventilkolben (67) permanent fluidführend mit dem einen Nutzanschluss (B) verbunden ist, dessen jeweils herrschender Fluiddruck an die Regeldruckkammer (80) weitergemeldet ist.

4. Ventil nach einem der vorstehenden Ansprüche, **dadurch gekennzeichnet, dass** in bestromtem Zustand des Magnetsystems (49) der Ventilkolben (67) eine Position innerhalb des Ventilgehäuses (25) einnimmt, bei dem der Druck im Druckversorgungsanschluss (P) dem Druck am weiteren Nutzanschluss (A) entspricht.

5. Ventil nach einem der vorstehenden Ansprüche, **dadurch gekennzeichnet, dass** der Ventilkolben (67) außenumfangsseitig mit konzentrisch zu seiner Verfahrachse angeordneten Fluidführungen (81, 82) versehen ist, die je nach Regelstellung des Ventilkolbens (67) zumindest eine Verbindung vom Druckversorgungsanschluss (P) mit dem jeweiligen Nutzanschluss (A, B) sowie dem jeweiligen Nutzanschluss (B, A) mit dem Tankanschluss (T) ermöglichen.

6. Ventil nach einem der vorstehenden Ansprüche, **dadurch gekennzeichnet, dass** der Energiespeicher, insbesondere in Form der Druckfeder (73), auf diejenige Seite des Magnetankers (72) einwirkt, welche dem Ventilkolben (67) abgewandt ist.

7. Ventil nach einem der vorstehenden Ansprüche, **dadurch gekennzeichnet, dass** der eine bei unbestromtem Magnetsystem (49) vom Fluidvolumenstrom einzuregelnde Nutzanschluss (B) stirnseitig in das Ventilgehäuse (25) eintritt und die weiteren Anschlüsse (A, P, T) radial im Ventilgehäuse (25) geführt sind.

8. Ventil nach Anspruch 5 oder nach einem der Ansprüche 6 bis 7 wenn diese von Anspruch 5 abhängig sind, **dadurch gekennzeichnet, dass** die jeweilige Fluidführung (81, 82) aus mindestens einer nutförmigen Vertiefung im Ventilkolben (67) gebildet ist.

9. Ventil nach Anspruch 8, **dadurch gekennzeichnet, dass** die beiden Fluidführungen (81, 82) im Ventilkolben (67) über einen unvertieften Bereich (92) desselben voneinander separiert sind, der in Richtung der jeweiligen Fluidführung (81, 82) gegenüberliegende Kanten (90 bzw. 91) aufweist, die jeweils den Durchgang an mindestens einer Öffnung (85) im Ventilgehäuse (25) des Nutzanschlusses (A) für die eine (81) bzw. die andere Fluidführung (82) steuern.

10. Ventil nach Anspruch 9, **dadurch gekennzeichnet, dass** die beiden Fluidführungen (81, 82) auf ihren einander abgewandten Seiten in weitere unvertiefte Bereiche des Ventilkolbens (67) übergehen, die jeweils mindestens eine Bohrung (86, 87) aufweisen, deren Rand zumindest teilweise mit einer zuordenbaren Öffnung (83 bzw. 84) im Ventilgehäuse (25) für den Druckversorgungsanschluss (P) bzw. für den Tankanschluss (T) eine Regelkante (88 bzw. 89) bilden.

11. Ventil nach Anspruch 10, **dadurch gekennzeichnet, dass** in jeder Steuerstellung des einen unvertieften Bereichs (92) des Ventilkolbens (67) die eine Fluidführung (81) in permanenter Fluidverbindung mit mindestens einer im Ventilgehäuse (25) angeordneten weiteren Öffnung (83) für den Druckversorgungsanschluss (P) ist, die von der mindestens einen Öffnung (83) für denselben Anschluss (P) im Ventilgehäuse (25) axial beabstandet angeordnet ist und dass auf der Innenseite des Ventilgehäuses (25) die beiden jeweiligen axial voneinander beabstandeten Öffnungen (83) über einen stegartig unvertieften Bereich des Ventilkolbens (67) in jeder seiner Verfahrstellungen voneinander separiert sind.

12. Ventil nach Anspruch 11, **dadurch gekennzeichnet, dass** in jeder Steuerstellung des einen unvertieften Bereichs (92) des Ventilkolbens (67) die andere Fluidführung (82) zumindest teilweise in permanenter Fluidverbindung mit mindestens einer im Ventilgehäuse (25) angeordneten weiteren Öffnung (84) für den Tankanschluss (T) ist, die von der mindestens einen Öffnung (84) für denselben Anschluss (T) im Ventilgehäuse (25) axial beabstandet angeordnet ist und dass auf der Innenseite des Ventilgehäuses (25) die beiden jeweiligen axial voneinander beabstandeten Öffnungen (84) über einen weiteren stegartig unvertieften Bereich des Ventilkolbens (67) in jeder seiner Verfahrstellung voneinander separiert sind.

13. Ventil nach einem der Ansprüche 8 bis 12, **dadurch gekennzeichnet, dass** in Verfahrrichtung des Ventilkolbens (67) gesehen, die axiale Länge der einen nutartigen Fluidverbindung (81) kleiner gewählt ist als die der anderen nutartigen Fluidverbindung (82).

14. Ventil nach einem der Ansprüche 8 bis 13, **dadurch gekennzeichnet, dass** die jeweilige nutartige Vertiefung der beiden Fluidverbindungen (81, 82) bodenseitig gesehen in einer gemeinsamen Ebene parallel zur jeweiligen Verschieberichtung des Ventilkolbens (67) liegen und dass die nutartigen Vertiefungen den Ventilkolben (67) außenumfangsseitig durchgehend umfassen.

15. Ventil nach einem der Ansprüche 9-12, **dadurch gekennzeichnet, dass** alle unvertieften Bereiche des Ventilkolbens (67) in einer gemeinsamen Ebene liegen, die parallel zu den Bodenseiten der Fluidverbindungen (81, 82) verläuft.

16. Ventil nach einem der Ansprüche 10 bis 15, **dadurch gekennzeichnet, dass** die jeweiligen Öffnungen (83, 84) für den Druckversorgungsanschluss (P) bzw. für den Tankanschluss (T) Paare von übereinander angeordneten Öffnungsreihen im Ventilgehäuse (25) ausbilden.

17. Ventil nach Anspruch 16, **dadurch gekennzeichnet, dass** im Ventilkolben (67) mehrere der Bohrungen (86, 87) jeweils eine eigene Bohrungsreihe ausbilden, die zumindest in einer Verfahrstellung des Ventilkolbens (67) zwischen den zuordenbaren Paaren von Öffnungsreihen (83, 84) in Richtung des Ventilgehäuses (25) und an dessen Innenwand ausmündend anliegen.

18. Befestigungsvorrichtung mit einem Ventil nach einem der vorstehenden Ansprüche und mindestens einem ansteuerbaren Hydraulikzylinder (3), dessen Kolben-Stangeneinheit (9, 15) zwei Arbeitsräume (11, 13) voneinander separiert, die an jeweils einen Nutzanschluss (A, B) des Ventils (60) nach einem der vorstehenden Ansprüche angeschlossen sind, **dadurch gekennzeichnet, dass** beim Ausfahren der Kolben-Stangeneinheit (9, 15) und deren Kollision mit einem Drittbauteil, wie einer Baggerschaufel (5), die Regeleinrichtung (62, 70, 79, 80, 88) des Ventils (60) anspricht und einen mechanisch einstellbaren, begrenzten Regeldruck für das Ansteuern der Kolben-Stangeneinheit (9, 15) ausgibt.

## Claims

1. Valve, in particular a 4/2 directional spool valve (60) with a valve housing (25) which has a pressure supply port (P), a tank port (T) and two work ports (A, B) as fluid ports, with a valve piston (67) guided so as to be longitudinally movable in the valve housing (25) for optionally connecting and disconnecting the fluid ports in the valve housing (25), and with an energisable solenoid system (49) for actuating the valve piston (67), wherein, in the de-energised state of the solenoid system (49), the control pressure at one of the work ports (A, B) can be adjusted, in particular limited, by means of a control device (62, 70, 79, 80, 88) arranged in the valve housing, wherein the control device routes the fluid pressure present at the one work port (B) into a control pressure chamber (80) for the purpose of actuating a pressure detecting piston (62, 70), which is operatively connected to the valve piston (67) and which, counter to the action of an energy accumulator, such as a compression spring (73), enables travel movements of the valve piston (67) for regulating the fluid flow between the pressure supply port (P) and this one work port (B), wherein the pressure detecting piston (62, 70) extends in a movable manner through a guide duct (69) arranged fixedly in the valve housing (25) and is in permanent contact with the valve piston (67) with its one free end (62) in any travel state of the valve piston and is in contact with an actuating rod (71) of the armature (72) of the solenoid system (49) with its other end.

2. Valve according to claim 1, **characterised in that** the variable-volume control pressure chamber (80) is encompassed by the valve housing (25) and is limited by the guide duct (69) and the valve piston (67).

3. Valve according to claim 1 or 2, **characterised in that** the control pressure chamber (80) is permanently fluidically connected to the one work port (B) via a baffle or choke (79) and a cut-out (78) in the valve piston (67), the prevailing fluid pressure in each case of said work port being communicated to the control pressure chamber (80).

4. Valve according to one of the preceding claims, **characterised in that**, in the energised state of the solenoid system (49), the valve piston (67) assumes a position within the valve housing (25) at which the pressure in the pressure supply port (P) corresponds to the pressure at the further work port (A).

5. Valve according to one of the preceding claims, **characterised in that** the valve piston (67) is provided on the outer circumference with fluid ducts (81, 82) arranged concentrically with respect to its travel axis, which fluid ducts, depending on the control position of the valve piston (67), enable at least one connection from the pressure supply port (P) to the respective work port (A, B) as well as from the respective work port (B, A) to the tank port (T).

6. Valve according to one of the preceding claims, **characterised in that** the energy accumulator, in particular in the form of the compression spring (73), acts on the side of the armature (72) which is directed away from the valve piston (67).

7. Valve according to one of the preceding claims, **characterised in that** the one work port (B) to be controlled by the fluid volume flow when the solenoid system (49) is de-energised enters the valve housing (25) on the end face and the further ports (A, P, T) are routed radially in the valve housing (25).

8. Valve according to claim 5 or according to one of claims 6 to 7, if they are dependent on claim 5, **characterised in that** the respective fluid duct (81, 82) is formed from at least one groove-shaped recess in the valve piston (67).

9. Valve according to claim 8, **characterised in that** the two fluid ducts (81, 82) in the valve piston (67) are separated from each other via a non-recessed region (92) thereof which, in the direction of the respective fluid duct (81, 82), has opposing edges (90 and 91 respectively) which each control the passage at at least one opening (85) in the valve housing (25) of the work port (A) for the one (81) or the other fluid duct (82) respectively.

10. Valve according to claim 9, **characterised in that** the two fluid ducts (81, 82) merge on the sides directed away from each other into further non-recessed regions of the valve piston (67), each of which has at least one hole (86, 87), the margin of which at least partially forms a control edge (88 and 89 respectively) with an associated opening (83 and 84 respectively) in the valve housing (25) for the pressure supply port (P) and for the tank port (T) respectively.

11. Valve according to claim 10, **characterised in that** in each control position of the one non-recessed region (92) of the valve piston (67), the one fluid duct (81) is in permanent fluid communication with at least one further opening (83), arranged in the valve housing (25), for the pressure supply port (P), which opening is arranged spaced apart axially from the at least one opening (83) for the same port (P) in the valve housing (25) and that, on the inside of the valve housing (25), the two openings (83) respectively spaced apart from each other axially are separated from each other via a web-like, non-recessed region of the valve piston (67) in each of its travel positions.

12. Valve according to claim 11, **characterised in that** in each control position of the one non-recessed region (92) of the valve piston (67), the other fluid duct (82) is at least partially in permanent fluid communication with at least one further opening (84), arranged in the valve housing (25), for the tank port (T), which opening is arranged spaced apart axially from the at least one opening (84) for the same port (T) in the valve housing (25) and that, on the inside of the valve housing (25), the two openings (84) respectively spaced apart from each other axially are separated from each other via a further web-like, non-recessed region of the valve piston (67) in each of its travel positions.

13. Valve according to one of claims 8 to 12, **characterised in that**, viewed in the travel direction of the valve piston (67), the axial length of the one groove-like fluid duct (81) is selected to be shorter than that of the other groove-like fluid duct (82).

14. Valve according to one of claims 8 to 13, **characterised in that** the respective groove-like recesses of the two fluid ducts (81, 82), viewed from the bottom, are located in a common plane parallel to the respective travel direction of the valve piston (67) and that the groove-like recesses surround the valve piston (67) on the outer circumference.

15. Valve according to one of claims 9 to 12, **characterised in that** all non-recessed regions of the valve piston (67) are located in a common plane which extends parallel to the bottom ends of the fluid ducts (81, 82).

16. Valve according to one of claims 10 to 15, **characterised in that** the respective openings (83, 84) for the pressure supply port (P) and for the tank port (T) respectively form pairs of rows of openings arranged one above the other in the valve housing (25).

17. Valve according to claim 16, **characterised in that** a plurality of the holes (86, 87) in the valve piston (67) each form their own row of holes which, at least in a travel position of the valve piston (67), are located between the associated pairs of rows of openings (83, 84) in the direction of the valve housing (25) and open out against its inner wall

18. Mounting device with a valve according to one of the preceding claims and at least one controllable hydraulic cylinder (3), the piston rod unit (9, 15) of which separates two work chambers (11, 13) from each other, which are each connected to a work port (A, B) of the valve (60) according to one of the preceding claims, **characterised in that** when the piston rod unit (9, 15) is extended and collides with a third component, such as an excavator shovel (5), the control device (62, 70, 79, 80, 88) of the valve (60) responds and releases a mechanically adjustable, limited control pressure for controlling the piston rod unit (9, 15).

## Revendications

1. Soupape, notamment distributeur (60) à tiroir à 4/2 voies, comprenant un corps (25) de soupape, qui a un raccord (P) d'alimentation en pression, un raccord (T) de réservoir et deux raccords (A, B) utiles comme raccords pour du fluide, comprenant un piston (67) de soupape guidé avec possibilité de se déplacer longitudinalement dans le corps (25) de la soupape pour, au choix, relier et séparer les raccords de fluide dans le corps (25) de la soupape, et comprenant un système (49) magnétique pouvant être alimenté en courant pour la commande du piston (67) de la soupape, dans laquelle, à l'état non alimenté en courant du système (49) magnétique, la pression de régulation sur l'un des raccords (A, B) utiles peut être réglée, notamment limitée, au moyen d'un dispositif (62, 70, 79, 80, 88) de régulation disposé dans le corps de la soupape, dans laquelle le dispositif de régulation achemine la pression de fluide appliquée au un raccord (B) utile dans une chambre (80) de pression de régulation en vue de commander un piston (62, 70) d'indication de la pression en liaison d'action avec le piston (67) de la soupape et permettant, à l'encontre de l'effet d'un accumulateur d'énergie, comme un ressort (73) de compression, des mouvements de déplacement du piston (67) de la soupape pour régler le courant en volume de fluide entre le raccord (P) d'alimentation en pression et ce un raccord (B) utile,
dans lequel le piston (62, 70) d'indication de la pression passe d'une façon lui permettant de se déplacer dans un guidage (69) monté fixe dans le corps (25) de la soupape et est, par sa une extrémité (62) libre, dans tout état de déplacement du piston (67) de la soupape, en contact permanent avec celui-ci, et est, par son autre extrémité, en contact avec une tige (71) d'actionnement de l'armature (72)d'aimant du système (49) magnétique.

2. Soupape suivant la revendication 1, **caractérisée en ce que** la chambre (80) de pression de régulation de volume variable, est entourée du corps (25) de la soupape ainsi que délimitée par le guidage (69) et le piston (67) de la soupape.

3. Soupape suivant la revendication 1, **caractérisée en ce que** la chambre (80) de la pression de régulation communique par un diaphragme ou un étranglement (79) ainsi que par un évidement (78) dans le piston (67) de la soupape, fluidiquement d'une manière permanente, avec le un raccord (B) utile, dont la pression de fluide qui y règne est appliquée à la chambre (80) de la pression de régulation.

4. Soupape suivant l'une des revendications précédentes, **caractérisée en ce que** dans l'état sans courant du système (49) magnétique, le piston (67) de la soupape prend, à l'intérieur du corps (25) de la soupape, une position dans laquelle la pression dans le raccord (P) d'alimentation en pression correspond à la pression à l'autre raccord (A) utile.

5. Soupape suivant l'une des revendications précédentes, **caractérisée en ce que** le piston (67) de la soupape est pourvu, du côté du pourtour extérieur, de conduites (81, 82) de fluide, qui sont montées concentriquement à son axe de déplacement et qui, suivant la position de régulation du piston (67) de la soupape, rendent possible au moins une communication du raccord (T) d'alimentation en pression avec le raccord (A, B) utile respectif, ainsi que du raccord (B, A) utile respectif avec le raccord (T) de réservoir.

6. Soupape suivant l'une des revendications précédentes, **caractérisée en ce que** l'accumulateur d'énergie, notamment sous la forme d'un ressort (73) de compression, agit sur la face de l'armature (72) magnétique, qui est loin du piston (67) de la soupape.

7. Soupape suivant l'une des revendications précédentes, **caractérisée en ce que** le un raccord (B) utile, à réguler en courant en volume du fluide lorsque le système (49) magnétique n'est pas alimenté en courant, pénètre du côté frontal dans le corps (25) de la soupape et les autres raccords (A, P, T) sont guidés radialement dans le corps (25) de la soupape.

8. Soupape suivant la revendication 5 ou l'une des revendications 6 à 7 lorsque celles-ci dépendent de la revendication 5, **caractérisée**
**en ce que** la conduite (81, 82) respective de fluide est formée d'au moins une cavité en forme de rainure dans le piston (67) de la soupape.

9. Soupape suivant la revendication 8, **caractérisée en ce que** les deux conduites (81, 82) de fluide dans le piston (67) de la soupape sont séparées l'une de l'autre par une partie (92) de celui-ci non évidée, qui a, en direction de la conduite (81, 82) de fluide respective, des bords (90, 91) opposés, qui chacun commande le passage à au moins une ouverture (85) dans le corps (25) de la soupape du raccord (A) utile pour l'une (81) ou l'autre conduite (82) de fluide.

10. Soupape suivant la revendication 9, **caractérisée en ce que** les deux conduites (81, 82) de fluide se transforment, de leur côté loin l'un de l'autre, en d'autres parties non évidées du piston (67) de la soupape, qui ont chacune au moins un trou (86, 87) dont le bord forme, au moins en partie, avec une ouverture (83, 84) pouvant être associée du corps (25) de la soupape, un bord (88 et 89) de régulation pour le raccord (P) d'alimentation en pression et pour le raccord (T) de réservoir.

11. Soupape suivant la revendication 10, **caractérisée en ce que**, en chaque position de commande de la une partie (92) non évidée du piston (67) de la soupape, la une conduite (80) de fluide est en communication fluidique permanente avec au moins une autre ouverture (83), disposée dans le corps (25) de la soupape, pour le raccord (P) d'alimentation en pression, ouverture (83) qui est à distance axialement de la au moins une ouverture (83) pour le même raccord (P) dans le corps (25) de la soupape et **en ce que**, sur la face intérieure du corps (25) de la soupape, les deux ouvertures (83) à distance l'une de l'autre axialement sont séparées l'une de l'autre par une partie non évidée de type en nervure du piston (67) de la soupape dans chacune de ses positions de déplacement.

12. Soupape suivant la revendication 11, **caractérisée en ce que**, en chaque position de commande de la une partie (92) non évidée du piston (67) de la soupape, l'autre conduite (82) de fluide est, au moins en partie, en communication fluidique permanente avec au moins une autre ouverture (84), disposée dans le corps (25) de la soupape, pour le raccord (T) de réservoir, ouverture qui est disposée à distance axialement de la au moins une ouverture (84) pour le même raccord (T) dans le corps (25) de la soupape et **en ce que**, sur la face intérieure du corps (25) de la soupape, les deux ouvertures (84) à distance axialement l'une de l'autre sont séparées l'une de l'autre par une autre partie non évidée de type à nervure du piston (67) de la soupape en chacune de ses positions de déplacement.

13. Soupape suivant l'une des revendications 8 à 12, **caractérisée en ce que**, considéré dans la direction de déplacement du piston (67) de la soupape, la longueur axiale de la une conduite (81) de fluide de type en rainure est choisie plus petite que celle de l'autre conduite (82) de fluide de type en rainure.

14. Soupape suivant l'une des revendications 8 à 13, **caractérisée en ce que** l'évidement respectif de type en rainure des deux conduites (81, 82) de fluide, considéré du côté du fond, sont dans un plan commun parallèle à la direction de déplacement respectif du piston (67) de la soupape et **en ce que** les évidements de type à rainure entourent d'une manière continue du côté du pourtour extérieur le piston (67) de la soupape.

15. Soupape suivant l'une des revendications 9 à 12, **caractérisée en ce que** toutes les parties non évidées du piston (67) de la soupape sont dans un plan commun, qui s'étend parallèlement aux côtés de fond des conduites (81, 82) de fluide.

16. Soupape suivant l'une des revendications 10 à 15, **caractérisée en ce que** les ouvertures (83, 84) respectives pour le raccord (P) d'alimentation en pression et pour le raccord (T) de réservoir constituent des paires de rangées d'ouvertures, disposées les unes sur les autres, dans le corps (25) de la soupape.

17. Soupape suivant la revendication 16, **caractérisée en ce que**, dans le piston (67) de la soupape, plusieurs des trous (86, 87) constituent respectivement une rangée de trous propres qui, au moins dans une position de déplacement du piston (67) de la soupape, débouchent entres les paires pouvant être associées, de rangées (83, 84) d'ouvertures en direction du corps (25) de la soupape et sur sa paroi intérieure.

18. Système de fixation, comprenant une soupape suivant l'une des revendications précédentes et au moins un vérin (3) hydraulique pouvant être commandé, dont l'unité (9, 15) piston-tige sépare l'un de l'autre deux espaces (11, 13) de travail, qui sont raccordés à respectivement un raccord (A, B) utile de la soupape (60) suivant l'une des revendications précédentes, **caractérisé en ce que**, lors de la sortie de l'unité (9, 15) piston-tige et lors de sa collision avec une pièce tierce, comme une pelle (5) d'excavateur, le dispositif (62, 70, 79, 80, 88) de régulation de la soupape (60) réagit et donne une pression de régulation limitée, pouvant être réglée mécaniquement pour la commande de l'unité (9, 15) de piston-tige.
